# EUROPEAN PATENT SPECIFICATION

(11) **EP 1 681 776 B1**
(45) Date of publication and mention of the grant of the patent: **05.06.2013**
(21) Application number: 04792643.1
(22) Date of filing: 20.10.2004
(51) Int. Cl.: H02H 11/00, H04B 3/54, F24F 11/02

(54) **FACILITIES EQUIPMENT COMMUNICATION CIRCUIT**
EINRICHTUNGSGERÄTE-KOMMUNIKATIONSSCHALTUNG
CIRCUIT DE COMMUNICATION D'EQUIPEMENT D'INSTALLATIONS

(30) Priority: 21.10.2003 JP 2003360222; 25.05.2004 JP 2004154284; 21.09.2004 JP 2004272850
(43) Date of publication of application: 19.07.2006
(73) Proprietor: Panasonic Corporation, Kadoma-shi Osaka 571-8501 (JP)
(72) Inventor: DOYAMA, Yoshiaki, Matsushita Elect.Ind. Co.Ltd., Chuo-ku,Osaka-shi, Osaka 540-6319 (JP); TAKEDA, Yoshihiko , Matsushita Elect.Ind. Co.Ltd., Chuo-ku,Osaka-shi, Osaka 540-6319 (JP)
(74) Representative: Eisenführ, Speiser & Partner
(86) International application number: PCT/JP2004/015477
(87) International publication number: WO 2005/039069

(56) References cited:
- EP-A- 0 763 877
- WO-A-94/18803
- WO-A1-00/69124
- WO-A1-00/75795
- DE-A1- 19 520 596
- JP-A- 6 253 376
- JP-A- 7 133 950
- JP-A- 11 313 436
- JP-A- 59 040 737
- JP-U- 59 052 754

## Description

### BACKGROUND OF THE INVENTION

### 1. Field of technology

The present invention relates to a data communication circuit for communication between the main components of residential building equipment systems such as air conditioners, such as for data communication between the outdoor compressor unit and the multiple indoor units connected to the outdoor unit in a split air conditioning system, and relates more particularly to a circuit enabling high speed communication even when the number of communication lines is few and the communication lines are long.

### 2. Description of Related Art

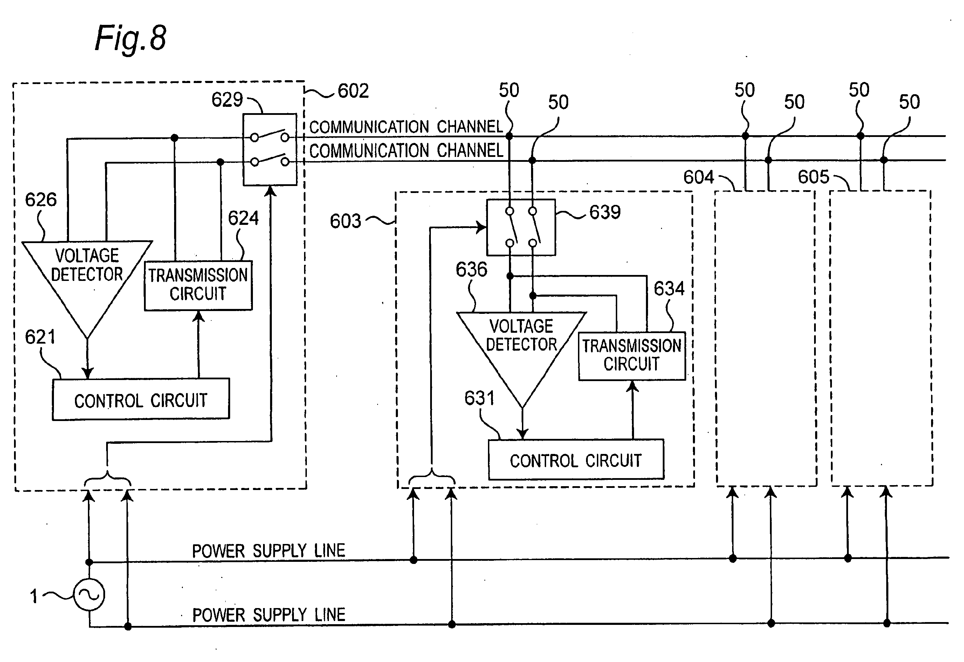

Communication between the indoor and outdoor units of a conventional split air conditioning system uses three lines of which two carry the AC power supply, the remaining line is for data communication, and the reference communication power supply uses one of the AC supply lines. See, for example, Japanese Unexamined Patent Application Publication No. H06-147616.
This method sends and receives data over a single communication line, drives the LED on the primary side of reception photocouplers 526 and 536 and receives data through control circuits 521, 531 depending on whether or not current is flowing over the data communication line. Resistors 529, 539 and diodes 528, 538 inserted in series to the signal path protect the communication circuit from excessive voltage being applied as a result of improper wiring.
As shown in FIG. 8, another communication method uses dedicated communication lines for non-polarized communication over two data lines. This method enables a higher data communication rate than is possible with the three lines used in the first method described above. Furthermore, because this method also separates the power supply lines from the communication lines and power is not supplied to the control circuits 621, 631 if the power supply line is mistakenly connected to the communication line, the relays 629, 639 inserted in series to the communication circuit do not turn on and damage to the circuits due to incorrect wiring is prevented. This second method is described more fully in "Split air conditioning systems for buildings with different type and capacity requirements" (in Japanese), Ogawa, et al., National Technical Report, Vol. 38, No. 1, Feb., 1992.

### [Problem to be solved]

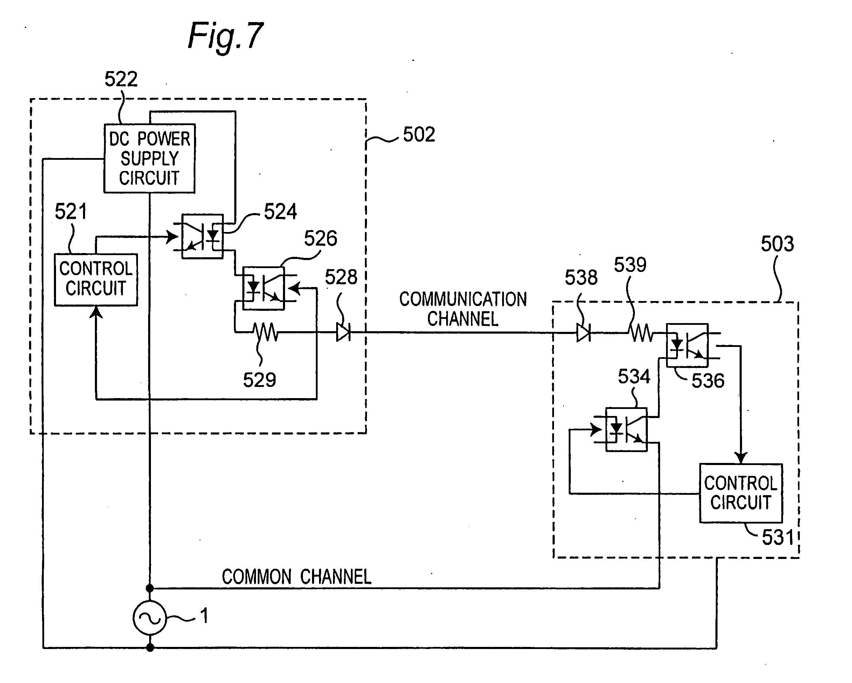

A problem with data communication using three lines as shown in FIG. 7 and described above is that because of the resistor inserted to the communication line to prevent circuit damage resulting from improper wiring, circuit response is slowed and high speed data transfer is not possible when the length of the wiring is long because of the time constant that is determined by the stray capacitance of the communication lines and the circuit protection resistance.
A problem with the method shown in FIG. 8 is that because the communication lines and power supply lines are separate, a minimum of at least four lines is required.

### SUMMARY OF THE INVENTION

The present invention is directed to solving these problems, and an object of the invention is to provide a communication circuit that requires only three lines for communication with a plurality of terminals while still enabling high speed data communication and protection from damage caused by improper wiring.

To achieve this object, a building equipment communication circuit according to a first aspect of the invention is a building equipment communication circuit comprising a parent station (2) connected to at least one child station with the communication channel connection unit of each parent station and child station connected to a communication line, and the common channel connection unit of each parent station and child station connected to an AC power source, wherein:
the parent station (2) internally comprises
   a DC power supply circuit (22) for converting alternating current to direct current,
   a constant current circuit (23), switching device (24; 124), and current detection means (26) connected in series between both output electrodes of the DC power supply circuit,
   a parent station relay (25; 125) disposed between the communication channel connection unit and connection node between the switching device and current detection means,
   an abnormal voltage detection means (28, 29; 128, 129, 120) disposed between the communication channel connection unit and negative electrode of the DC power supply circuit, and
   a control circuit (21; 121) for controlling the switching device and parent station relay based on input signals from the current detection means and abnormal voltage detection means; and
each child station internally comprises
   a child station relay (35) connected to one side of the communication channel connection unit,
   a child station constant current circuit (33) and child station current detection means (36) disposed in series between the other side of the child station relay and the AC power source,
   a child station switching device (34) disposed between the child station relay and the AC power source,
   a child station abnormal voltage detection means (38, 39; 138, 139, 130), and
   a control circuit (31) for controlling the child station relay and child station switching device based on input signals from the child station current detection means and child station abnormal voltage detection means.

There is substantially no response delay in the circuit due to the time constant determined by the produce of the stray capacitance and resistance because there are no resistance elements on the communication channel, and high speed data communication is therefore possible. Furthermore, inserting a relay to the communication circuit can prevent a high voltage from being applied to the circuit when a high voltage is applied to the communication channel due to improper wiring, and high speed data communication and power supply between devices can be achieved with three lines including the power supply lines.

A building equipment communication circuit according to another aspect of the invention is a building equipment communication circuit comprising a parent station (2) connected to at least one child station with the communication channel connection unit of each parent station and child station connected to a communication line and the common channel connection unit of each parent station and child station connected to an AC power source, wherein:
the parent station (2) internally comprises
   a DC power supply circuit (122) for converting alternating current to direct current,
   a constant current circuit (323) and current detection means (326) connected in series between both output electrodes of the DC power supply circuit,
   a switching device (319, 324) disposed between the node between the constant current circuit and current detection means, the communication channel connection unit, and the negative electrode of the DC power supply circuit,
   a parent station relay (125) disposed between the communication channel connection unit and connection node between the constant current circuit and current detection means,
   an abnormal voltage detection means (128, 129, 120) disposed between the communication channel connection unit and negative electrode of the DC power supply circuit, and
   a control circuit (321) for controlling the switching device for receiving input from the current detection means and abnormal voltage detection means, and the parent station relay; and
each child station internally comprises
   a child station relay (35) connected to one side of the communication channel connection unit,
   a child station constant current circuit (33) and child station current detection means (36) disposed in series between the child station relay (35) connected to one side of the communication channel connection unit and the node between other side of the child station relay and the AC power source,
   a child station switching device (34, 32) disposed between the child station relay and the AC power source,
   a child station abnormal voltage detection means (38, 139, 130) disposed between the communication channel connection unit and AC power supply, and
   a control circuit (31) for controlling the child station relay and child station switching device based on input signals from the child station current detection means and child station abnormal voltage detection means.

A building equipment communication circuit according to another aspect of the invention is a building equipment communication circuit comprising a parent station (2) connected to at least one child station with the communication channel connection unit of each parent station and child station connected to a communication line and the common channel connection unit of each parent station and child station connected to an AC power source, wherein:
the parent station (2) internally comprises
   a DC power supply circuit (22) for converting alternating current to direct current,
   a constant current circuit (223) capable of varying the output current and a current detection means (26) connected in series between both output electrodes of the DC power supply circuit,
   a parent station relay (25) disposed between the communication channel connection unit and connection node between the constant current circuit capable of varying the output current and current detection means,
   an abnormal voltage detection means (28, 29) disposed between the communication channel connection unit and negative electrode of the DC power supply circuit, and
   a control circuit (21) for controlling the constant current circuit capable of varying the output current and the parent station relay based on input signals from the current detection means and abnormal voltage detection means; and
each child station internally comprises
   a child station relay (35) connected to one side of the communication channel connection unit,
   a child station constant current circuit (33) and child station current detection means (36) disposed in series between the other side of the child station relay and the AC power source,
   a child station switching device (331, 34) disposed between the child station relay and the AC power source,
   a child station abnormal voltage detection means (38, 39) disposed between the communication channel connection unit and AC power supply, and
   a control circuit (31) for controlling the child station relay and child station switching device based on input signals from the child station current detection means and child station abnormal voltage detection means.

A building equipment communication circuit according to another aspect of the invention preferably also has a constant voltage circuit (27) disposed between both output electrodes of the DC power supply circuit (22) of the parent station.

Further preferably, a second current detection means (231) is connected in series to the parent station current detection means (26) for detecting a higher current level than current detection means (26). Based on the output of the second current detection means, the current flowing to the parent station current detection means is bypassed to another signal path (232).

Yet further preferably, a second current detection means (211) is connected in series to the parent station current detection means for detecting a higher current level than current detection means. Based on the output of the second current detection means, the current output of the constant current circuit (223) that varies the output current of the parent station is reduced.

Yet further preferably, the transmission switching device of the child station is a semiconductor switching device (34) and impedance device (331) connected in series.

### [Effect of the invention]

As will be known from the preceding description, when power supply lines and communication lines are required such as between the outdoor and indoor units of a split air conditioner system, the present invention can distribute the connection to a plurality of terminals while adjusting the voltage by means of a constant current circuit. Because a resistor is not connected in series to the [constant current] circuit, there is no time constant determined by the product of stray capacitance and resistance, and high speed data transfer is thus possible.

The invention also detects the voltage applied to the communication line and interrupts the communication circuit by means of a relay when the voltage is high. This arrangement prevents circuit damage resulting from improper wiring, can distinguish improper wiring from a communication circuit failure, and can thus indicate the cause of the problem to the wiring contractor.
Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a block diagram of a building equipment communication circuit according to a first embodiment of the invention.
FIG. 2 is a block diagram of a building equipment communication circuit according to a second embodiment of the invention.
FIG. 3 is a block diagram of a building equipment communication circuit according to a third embodiment of the invention.
FIG. 4 is a flow chart of the control process of the present invention.
FIG. 5 is a block diagram of a building equipment communication circuit according to a fourth embodiment of the invention.
FIG. 6 is a block diagram of a building equipment communication circuit according to a fifth embodiment of the invention.
FIG. 7 is a circuit diagram of a conventional communication circuit.
FIG. 8 is a circuit diagram of a another conventional communication circuit.
FIG. 9 is a block diagram of a building equipment communication circuit according to a sixth embodiment of the invention.
FIG. 10 is a block diagram of a building equipment communication circuit according to a seventh embodiment of the invention.
FIG. 11 is a block diagram of a building equipment communication circuit according to an eighth embodiment of the invention.
FIG. 12 is a circuit diagram of a constant current circuit for varying the current level.
FIG. 13 is a circuit diagram describing the operating principle of current bypass control.
FIG. 14 is a block diagram of a building equipment communication circuit according to a ninth embodiment of the invention.
FIG. 15 is a circuit diagram describing the operating principle of the parent station in the ninth embodiment of the invention.
FIG. 16 is a block diagram of a building equipment communication circuit according to a tenth embodiment of the invention.

### [Key to the figures]

1 AC power source
2, 202, 302, 802 parent station
3 - 5, 203 - 205, 303 - 305, 703, 704, 803, 804 child
station
21, 31 control circuit
25, 35 relay
24, 34 transmission photocoupler
23, 33, 323 constant current circuit
26, 36 reception photocoupler
29, 39 AC photocoupler
22 DC power supply circuit
50 communication channel connection node
51 common channel connection node

### DESCRIPTION OF THE PREFERRED EMBODIMENTS

Preferred embodiments of the present invention are described below with reference to the accompanying figures. It will be noted that the present invention is not limited to these embodiments.

### Embodiment 1

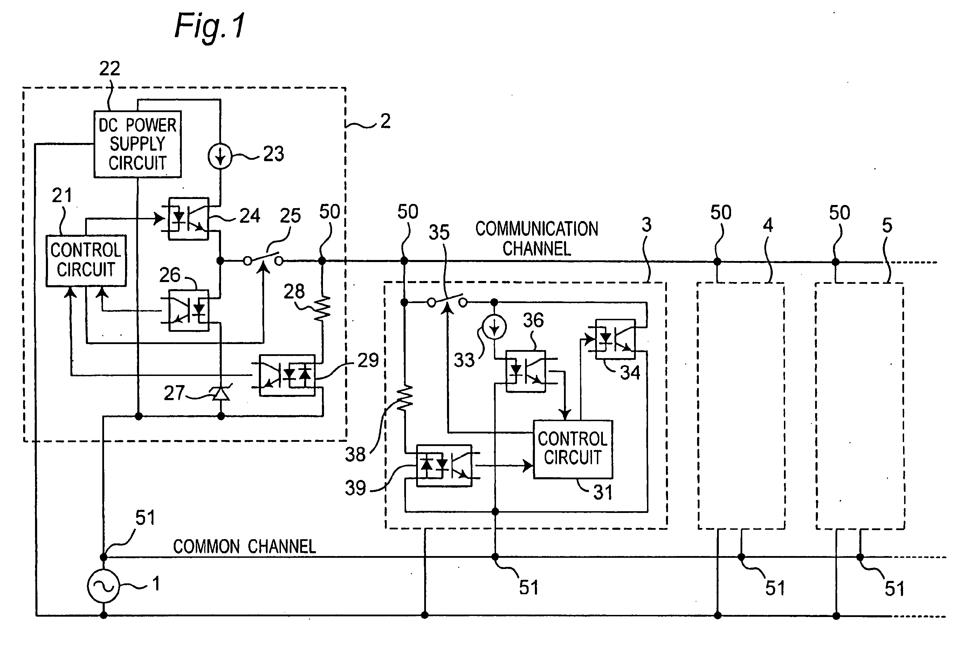

In FIG. 1 circuit block 2 is a parent station circuit, and circuit blocks 3, 4, and 5 are child station circuits.
The DC power supply circuit 22 of the parent station 2 circuit generates a DC power supply from power acquired from an AC power source 1 for driving the system. The constant current circuit 23, the secondary side of the transmission photocoupler 24, the primary side of the reception photocoupler 26, and constant voltage circuit 27 are connected in series between the positive side of the DC power supply circuit 22 and the negative side of the DC power supply circuit 22.
The transmission photocoupler 24 renders a switching device, and the reception photocoupler 26 renders a current detection means.
By connecting the negative side of the DC power supply circuit 22 to one side of the AC power source 1, the parent station 2 can be connected to the child stations using only three lines including the power supply lines.
The node between the secondary side of the transmission photocoupler 24 and the primary side of the reception photocoupler 26 is connected to a relay 25, and the other side of the relay 25 is connected by wire to child stations 3, 4, 5 as the connection node to the communication line. A resistor 28 and AC photocoupler 29 rendering a primary side LED in both directions are disposed between the communication node and the negative side of the DC power supply circuit 22. The resistor 28 and AC photocoupler 29 constitute an abnormal voltage detection means.
The control circuit 21 of the parent station 2 outputs a transmission signal to the primary side of the transmission photocoupler 24, and receives a reception signal input from the secondary side of the reception photocoupler 26, and thus controls normal data communication processing. The control circuit 21 also monitors output from the AC photocoupler 29, and prevents the relay 25 from turning on if a high voltage is applied to the communication node due to improper wiring, for example.
It will be obvious that this system will also operate if the connection between the constant current circuit 23 and the secondary side of the transmission photocoupler 24 is reversed from that shown in the figure. The connection between the secondary side of the reception photocoupler 26 and the constant voltage circuit 27 can likewise be reversed, and the connection between the resistor 28 and the primary side of the AC photocoupler 29 can be reversed.

The arrangement of the child station 3 circuit block is described next. In the child station as in the parent station, a resistor 38 and AC photocoupler 39 are connected between the communication channel, the device power supply, and the common channel. The resistor 38 and AC photocoupler 39 constitute an abnormal voltage detection means.

The communication channel is connected through the relay 35 to the common channel by way of the constant current circuit 33 and the primary side of the reception photocoupler 36, and is also connected to the common channel through the secondary side of the transmission photocoupler 34. The reception photocoupler 36 constitutes the current detection means of the child station. As in the parent station 2, the control circuit 31 of the child station 3 outputs a transmission signal to the primary side of the transmission photocoupler 34, gets a reception signal input from the secondary side of the reception photocoupler 36, and thus controls the normal data communication process.
The control circuit 31 also monitors output from the AC photocoupler 39 and prevents the relay 35 from turning on if a high voltage is applied to the connection node to the communication channel due to improper wiring, for example.
Also as in the parent station 2, the connection between the constant current circuit 33 and the primary side of the reception photocoupler 36 can be reversed, and the connection between the resistor 38 and the primary side of the AC photocoupler 39 can be reversed without affecting operation.

As will be known from the above description, the control circuit 21 of the parent station turns the relay 25 of the parent station turns on when the abnormal voltage detection circuit 28, 29 of the parent station determines that the voltage between the communication channel connection node and the DC power supply circuit is below a predetermined level, and the control circuit 31 of the child station turns the relay 35 of the child station on when the abnormal voltage detection circuit 38, 39 of the child station determines that the voltage between the communication channel connection node and the DC power supply circuit is below a predetermined level.

Note that a resistor can be connected parallel to the serial connection between the constant voltage circuit 27 and the reception photocoupler 26 that is used as a current detection means on the parent station, and part of the current can be passed through this resistor.

The three wires used for the AC power supply lines and communication channel can be connected in the same way to child station 4 and child station 5.

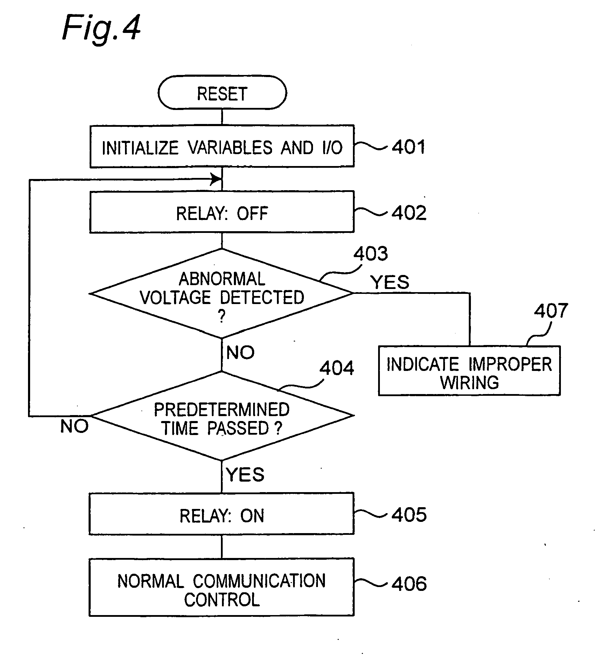

FIG. 4 is a flow chart of the process for controlling the relay 25, 35 of the control circuit 21, 31 in the parent station 2 and child station 3, respectively. When power is supplied to the control circuit 21 or control circuit 31, causing the program to reset, variables and input/output control are initialized in step 401, and the relay 25 or 35 is turned off in step 402. The voltage level is then evaluated based on the output from the AC photocoupler 29 or 39 in step 403.

If the AC photocoupler 29, 39 is OFF in step 403, the likelihood is that a high voltage is not applied to the communication node to the communication channel. An abnormal voltage is thus not detected and control passes to step 404. If the AC photocoupler 29, 39 is ON, a high voltage is applied to the communication node and an abnormal voltage is thus detected.
Because the wiring is incorrect in this case a message indicating improper wiring is presented for the user on a display device (not shown in the figure) disposed to the system so that whoever did the wiring knows the problem is improper wiring and not a communication circuit failure. The display means could be a flashing LED or a text message presented on a LCD.
The control circuit then determines in step 404 if the AC photocoupler 29 or 39 has been off for a predetermined length of time. If a voltage is not applied between the communication channel and the common channel for at least a predetermined period of time, such as the time equal to a consecutive number of periods longer than the frequency period of the AC supply, the control circuit 21 turns the relay 25 on. Control goes to step 405 if the relay 25 remains continuously off for the predetermined time, and control returns to step 402 if this time has not passed. A high voltage is not being applied if control goes to step 405. The relay 25 or 35 therefore turns on and communication is enabled. Control then goes to step 406 and the normal communication control process takes over.

Data transfer with the circuit arrangement shown in FIG. 1 is described next.
In order to transmit data from the parent station 2, the transmission photocoupler 34 of the child station is turned off so that the child station 3, 4, 5 can receive, and the transmission photocoupler 24 of the parent station 2 switches on/off, thereby allowing current to flow to the communication channel and causing the reception photocoupler 36 of the child station 3 to turn on/off. Current is supplied to the primary side of the reception photocoupler 36 from the constant current circuit 23 if current output from the constant current circuit 23 is less than the current output from the constant current circuit 33, and from the constant current circuit 33 if current output from the constant current circuit 33 is less than the current output from the constant current circuit 23.

When there is a plurality of child stations as shown in FIG. 1, the lesser of the total current setting of the child station constant current circuit and the total current flow to the reception photocoupler 26 of the parent station 2 is the current setting of the constant current circuit 23 of the parent station 2.
To transmit data from the child station 3, the transmission photocoupler 24 of the parent station 2 goes on and the transmission photocoupler 34 of the child station 3 turns on/off. When the transmission photocoupler 34 is on, the potential difference between the communication line and the common channel is substantially zero, and the reception photocoupler 26 of the parent station 2 is off. When the reception photocoupler of another child station is off and the transmission photocoupler 34 is off, the reception photocouplers of the parent station 2 and the child stations are likewise on. Transmissions from one child station can therefore be simultaneously received by other child stations and the parent station.

### * Second embodiment

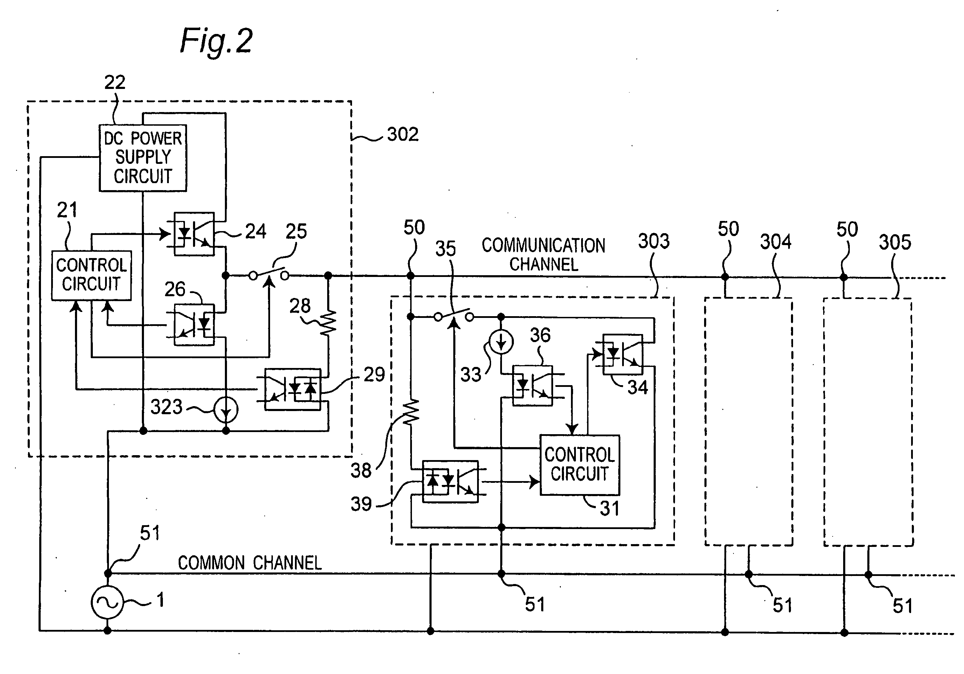

FIG. 2 is a circuit diagram of a second embodiment of the invention. In FIG. 2 the circuit arrangement of the parent station 302 is different from the parent station in the first embodiment of the invention. In the arrangement shown in FIG. 2 the positive side of the DC power supply circuit 22 of the parent station 302 is connected in series through the secondary side of the transmission photocoupler 24, the primary side of the reception photocoupler 26, and the constant current circuit 323 to the negative side of the DC power supply circuit 22.

The arrangement of this embodiment can thus omit the constant voltage circuit 27 used in the first embodiment of the invention. Sending/receiving and relay control in the control circuit 21 and control circuit 31 are the same as described in the first embodiment. The current flowing to the communication line is the combined current of the constant current circuits in the parent station 302 and the child stations 303, 304, and 305.
The same effect can be achieved when the connection between the reception photocoupler 26 and the constant current circuit 323 is reversed in the parent station 302.

### * Third embodiment

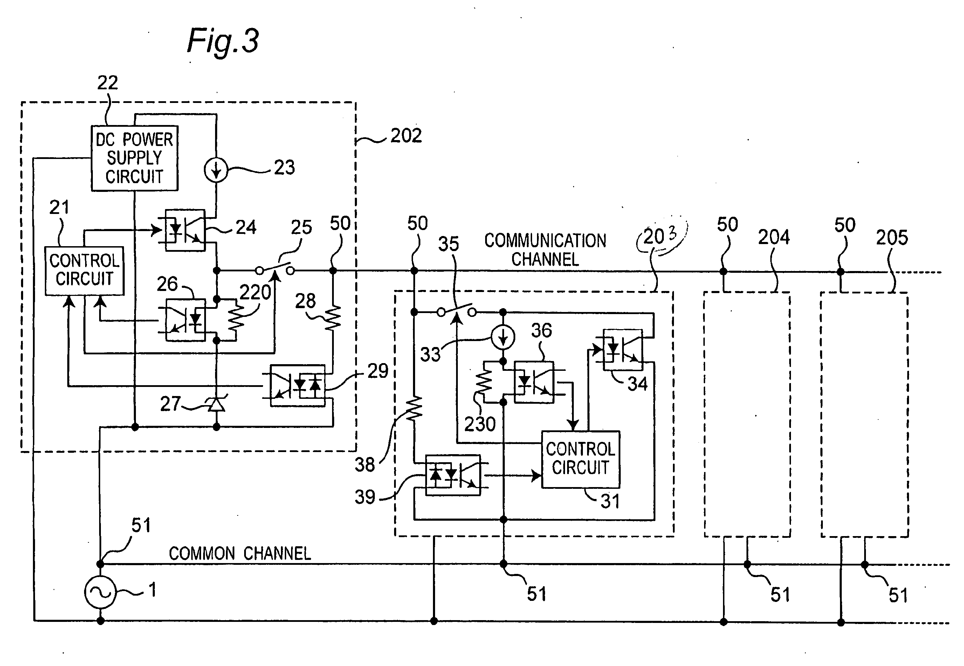

FIG. 3 is a circuit diagram of a third embodiment of the invention. The circuit shown in FIG. 3 differs from the circuit shown in FIG. 1 in that discharge resistors 220 and 230 are parallel connected to the primary side of reception photocoupler 26 and reception photocoupler 36. This enables quickly discharging any charge accumulated due to stray capacitance when current flow on the communication line is off, and thus enables further increasing the data communication rate.

### * Fourth embodiment

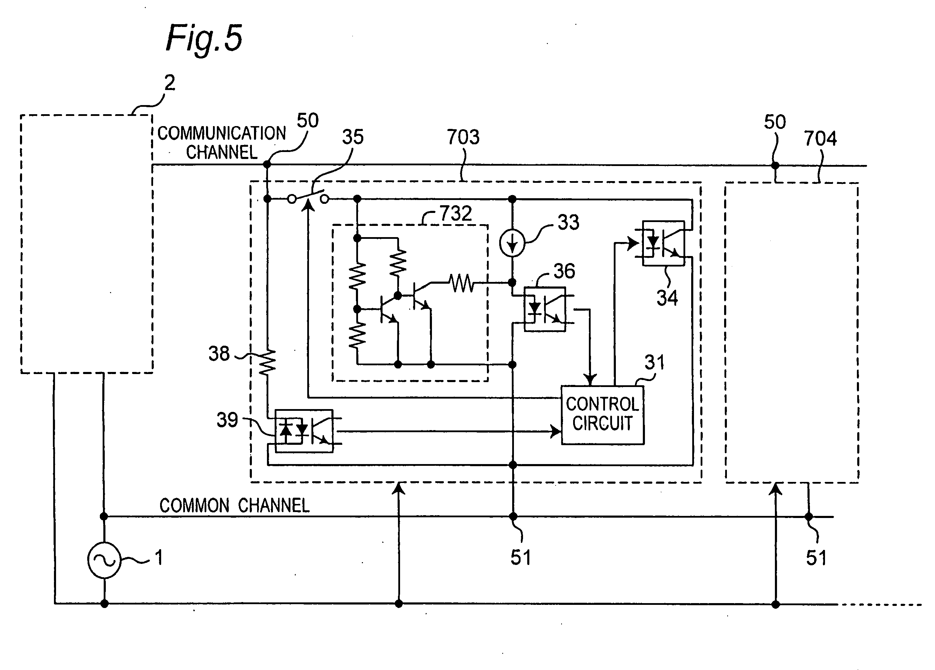

FIG. 5 is a circuit diagram of the child station in a fourth embodiment of the invention. The circuit shown in FIG. 5 differs from the circuits of the first and second embodiments in the addition of a discharge circuit 732 that discharges unconditionally to the primary side of the reception photocoupler 36 based on the communication channel voltage. When the potential of the communication channel is higher than the common channel, the discharge circuit 732 does not short the primary side of the reception photocoupler 36. When the current on the communication channel is off and the voltage begins to drop, however, the discharge circuit 732 works to short the primary side of the reception photocoupler 36. When the voltage of the communication channel drops sufficiently, the discharge circuit 732 stops operating and stops shorting the primary side of the reception photocoupler, and the voltage of the communication channel can therefore rise again.

### * Fifth embodiment

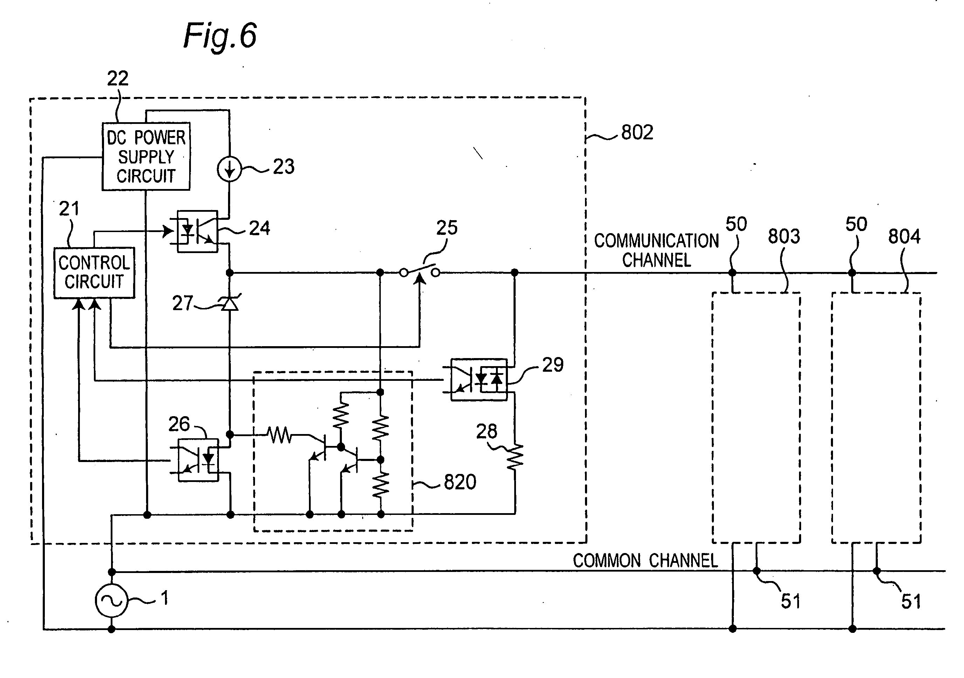

FIG. 6 is a circuit diagram of the parent station in a fifth embodiment of the invention. The connection of the reception photocoupler 26 and constant voltage circuit 27 in FIG. 6 is opposite that shown in FIG. 1, and a discharge circuit 820 is added to the primary side of the reception photocoupler 26. The circuit shown in FIG. 6 adds to the arrangement of the parent station 2 in the first embodiment a discharge circuit 820 that discharges unconditionally to the primary side of the reception photocoupler 26 based on the voltage of the communication line. When the potential of the communication channel is higher than the common channel, the discharge circuit 820 does not short the primary side of the reception photocoupler 26. When the current on the communication channel is off and the voltage begins to drop, however, the discharge circuit 820 works to short the primary side of the reception photocoupler 26. When the voltage of the communication channel drops sufficiently, the discharge circuit 820 stops operating and stops shorting the primary side of the reception photocoupler, and the voltage of the communication channel can therefore rise again.

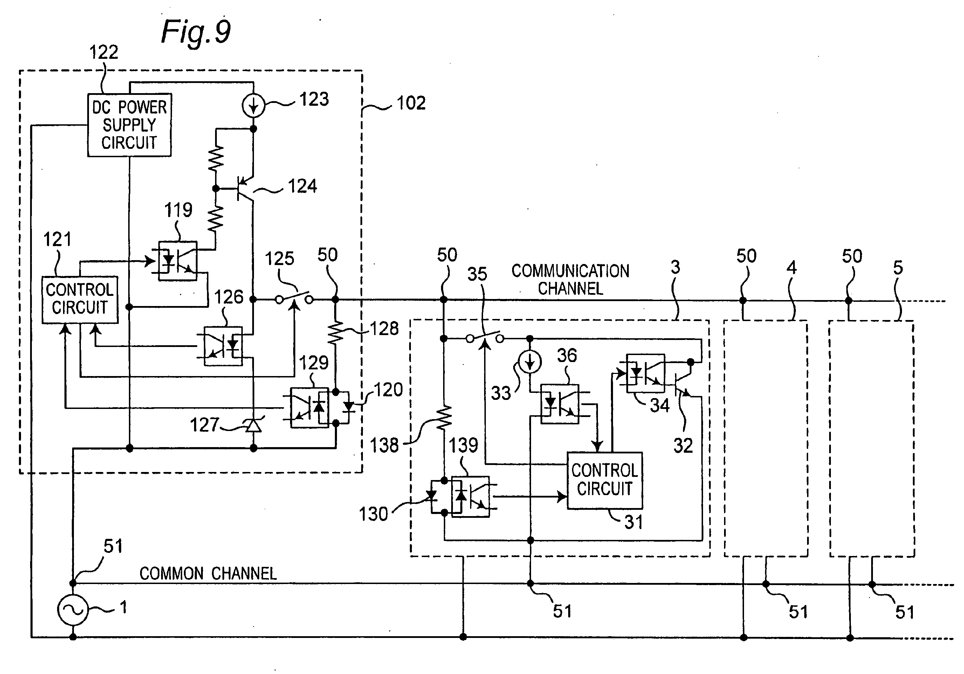

In FIG. 9 circuit block 102 is a parent station circuit, and circuit blocks 3, 4, and 5 are child station circuits.
The parent station 102 circuit generates a DC power supply by means of a DC power supply circuit 122 from power acquired from an AC power source 1 for driving the system. The constant current circuit 123, pnp transistor 124 driven by the secondary side of transmission photocoupler 119, the primary side of the reception photocoupler 126, and constant voltage circuit 127 are connected in series between the positive side of the DC power supply circuit 122 and the negative side of the DC power supply circuit 122.
The pnp transistor 124 renders a switching device, and the reception photocoupler 126 renders a current detection means.
By connecting the negative side of the DC power supply circuit 122 to one side of the AC power source 1, the parent station can be connected to the child stations using only three lines including the power supply lines.
The node between the pnp transistor 124 and the primary side of the reception photocoupler 126 is connected to a relay 125, and the other side of the relay 125 is connected by wire to child stations 3, 4, 5 as the connection node to the communication line. A resistor 128 and a photocoupler 129 comprising a primary side LED of opposite polarity to the DC power supply circuit 122 are disposed between the communication node and the negative side of the DC power supply circuit 122. The resistor 128, photocoupler 129, and diode 120 constitute an abnormal voltage detection means. The abnormal voltage detection circuit thus comprises resistor 128, an LED that emits when a voltage opposite the polarity during communication is applied to the primary side, and a diode 120 of the opposite polarity as the LED connected in parallel.

The control circuit 121 of the parent station 102 outputs a transmission signal to the primary side of the transmission photocoupler 124, and receives a reception signal input from the secondary side of the reception photocoupler 126, and thus controls normal data communication processing. The control circuit 121 also monitors output from the AC photocoupler 129, and prevents the relay 125 from turning on if AC voltage is applied to the communication node due to improper wiring, for example.
It will be obvious that this system will also operate if the connection between the constant current circuit 123 and the pnp transistor 124 is reversed from that shown in the figure. The connection between the secondary side of the reception photocoupler 126 and the constant voltage circuit 127 can likewise be reversed, and the connection between the resistor 128 and the primary side of the photocoupler 129 can be reversed.

The control circuit 121 of the parent station turns the relay 125 of the parent station turns on when the polarity of the voltage between the communication line connection node of the parent station and the DC power supply circuit is not opposite the polarity of the voltage during communication based on the output of the abnormal voltage detection means 128, 129, 120 of the parent station, and the control circuit 31 of the child station turns the relay 35 of the child station on when the polarity of the voltage between the communication line connection node and the DC power supply circuit is not opposite the polarity of the voltage during communication based on the output of the abnormal voltage detection means 138, 139, 130.

The arrangement of the child station 3 circuit block is described next. In the child station as in the parent station, a resistor 138 and photocoupler 139 are connected between the communication channel, the device power supply, and the common channel. Similarly to the photocoupler 129 of the parent station 102, the photocoupler 139 has a light-emitting diode connected on the primary side in reverse polarity to the polarity of the normally applied voltage, and a diode 30 connected in the same direction as the normally applied voltage. The resistor 138, photocoupler 139, and diode 130 constitute an abnormal voltage detection means.
The communication line is connected from the relay 35 through an npn transistor 32 driven by the secondary side of the transmission photocoupler 34 to the common channel. The child station is otherwise identical to the child station 3 shown in FIG. 1.

As described above, the parent station switching device comprises a photocoupler and a pnp transistor with the emitter of the photocoupler to the phototransistor on the secondary side connected to the common channel and the collector connected to the base of the pnp transistor, and the emitter and the collector of the pnp transistor form the switch circuit. The switching device of the child station can be rendered in the same way.
The child station switching device comprises a photocoupler and transistor with the emitter of the photocoupler to the phototransistor on the secondary side connected to the base of the transistor, the collector connected to the collector of the transistor, the emitter of the transistor connected to the common channel, and the emitter and collector of the transistor forming the switch.
Operation of this embodiment of the invention is the same as described in the flow chart in FIG. 4, and further description is omitted here.

Communication in this embodiment of the invention depends on whether current flows on the parent station 102 side to the constant current circuit 123, pnp transistor 124, reception photocoupler 126, and constant voltage circuit 127, and whether current flows on the child station 3 to the constant current circuit 33, reception photocoupler 36, transmission photocoupler 34, and 32. Compared with the arrangement shown in FIG. 1, the parent station 102 is not affected by the internal resistance on the secondary side of the transmission photocoupler 119 because the constant current flowing from the constant current circuit 123 to the reception photocoupler 126 does not pass through the secondary side of the transmission photocoupler 119. Because the communication current flows through a circuit arrangement having no resistance, the time constant that is determined by the product of resistance and electrostatic capacitance and is the major factor in delayed response is extremely low even when the electrostatic capacitance between the communication channel and the common channel increases when the length of the communication channel is long. High speed data communication is therefore possible.

As shown in FIG. 9, the voltage between the communication channel and the common channel may not be particularly high even when there are multiple child stations and the wiring is incorrect. A high voltage can still be distinguished from the voltage during normal communication in this case because a photocoupler and diode are used as the abnormal voltage detection means in this embodiment of the invention. The abnormal voltage detection means in this embodiment of the invention can also distinguish a high voltage caused by improper wiring from a high voltage resulting from a rise in the AC supply voltage when there is great fluctuation in the voltage of the AC power source 1.

### * Seventh embodiment

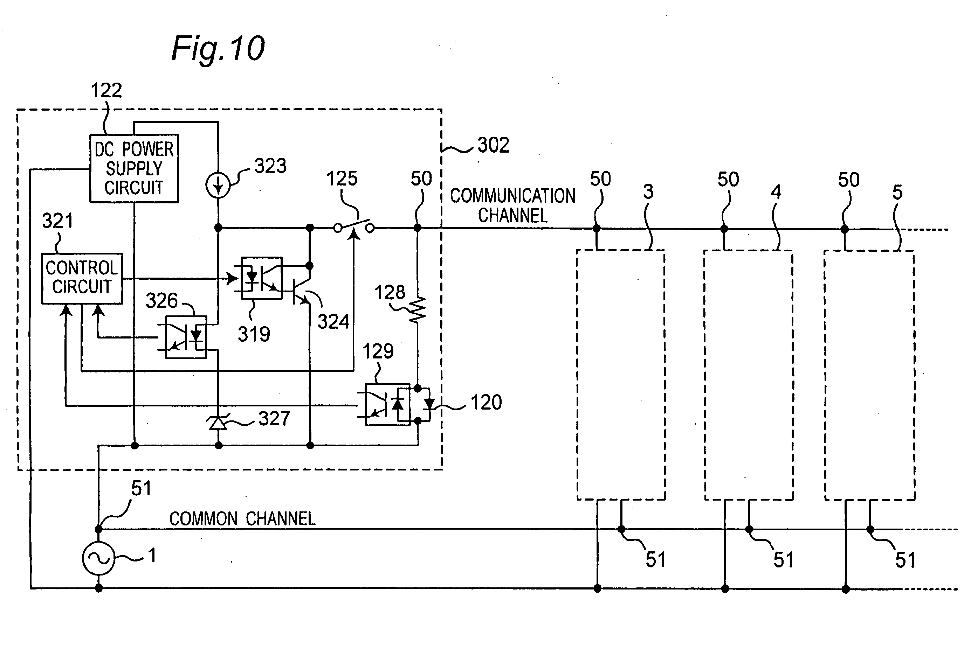

FIG. 10 is a circuit diagram of a seventh embodiment of the invention. The arrangement of the parent station 302 shown in FIG. 10 differs from the arrangement of the parent station in the sixth embodiment of the invention. In this parent station 302 a constant current circuit 323, the primary side of the reception photocoupler 326, and a constant voltage diode 327 are connected in series between the positive side of the DC power supply circuit 122 and the negative side of the DC power supply circuit 122. A transistor 324 that is driven by transmission photocoupler 319 is connected between the negative side of the DC power supply circuit 122 and the connection node between the constant current circuit 323 and the primary side of the reception photocoupler 326. As in the sixth embodiment, a relay 125 is connected between the communication channel and the connection node between the constant current circuit 323 and the primary side of the reception photocoupler 326 so that the communication circuit can be cut off if the system is incorrectly wired.

The voltage of the DC power supply circuit 122 can be lowered in this embodiment of the invention because there are fewer circuit components connected in series between the poles of the DC power supply circuit 122.
The same effect is achieved when the connection of the reception photocoupler 326 and constant voltage diode 327 is reversed in this parent station 302.

Data transfers with the circuit arrangement shown in FIG. 10 differs from data transfers with the arrangement shown in FIG. 9 in that the transmission photocoupler 319 is turned off for reception by the parent station. Operation is otherwise the same as in the sixth embodiment.
Furthermore, as in the sixth embodiment, high speed data communication is possible even when the wires are long because there are substantially no resistors in the data communication part.
Moreover, when transmitting data to a plurality of child stations, the parent station must supply current for the plural child stations and a large amount of current is required by the transmission photocoupler, but this seventh embodiment of the invention can transmit to the child stations with less current than is needed in the sixth embodiment.
Yet further, because the transmission photocoupler 319 is disposed between the communication channel and the common channel in this seventh embodiment of the invention, the supply current from the DC power supply circuit 122 passes the constant current circuit 323 and the load current is constant. The DC power supply circuit 122 is therefore easier to design. Furthermore, because the signal path does not turn off, circuit impedance is lower and the system is more resistant to the effects of external noise.

### * Eighth embodiment

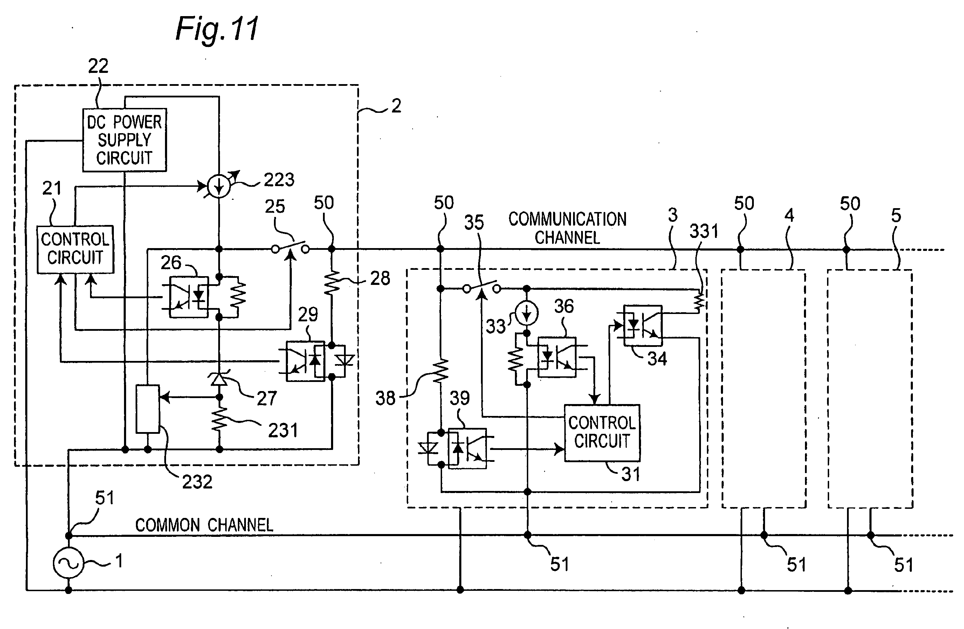

In FIG. 11 circuit block 2 is the parent station circuit and circuit blocks 3, 4, and 5 are the child station circuits.
The DC power supply circuit 22 of the parent station 2 circuit generates a DC power supply from power acquired from an AC power source 1 for driving the system. A constant current circuit 223 that can vary the current level, the primary side of the reception photocoupler 26, constant voltage circuit 27, and a current detection resistor 231 are connected in series between the positive side of the DC power supply circuit 22 and the negative side of the DC power supply circuit 22.

The constant current circuit 223 that can vary the current level is described in detail next. By connecting the negative side of the DC power supply circuit 22 to one side of the AC power source 1, the parent station 2 can be connected to the child stations using only three lines including the power supply lines. Control information is also input to bypass control circuit 232 from the node between the current detection resistor 231 and constant voltage diode 27. The bypass control circuit 232 operates to bypass current flowing from the connection node between the constant current circuit 223 that can vary the current level and the reception photocoupler 26 through the reception photocoupler 26 to the negative side of the DC power supply circuit 22.

A relay 25 is also connected to the node between the primary side of the reception photocoupler 26 and the constant current circuit 223 that can vary the current level, and the other side of the relay 25 is connected as the node to the communication channel a wired connection to the child stations 3, 4, 5. A resistor 28 and photocoupler 29 are disposed between the communication node and the negative side of the DC power supply circuit 22. The photocoupler 29 disposes the LED on the primary side opposite the polarity of the DC power supply circuit 22. The control circuit 21 of the parent station 2 outputs a transmission signal as a control command varying the current flow to the constant current circuit 223 that can vary the current level. The control circuit 21 also controls the normal data communication process based on a reception signal input from the secondary side of the reception photocoupler 26. The control circuit 21 also monitors the output of the inverse-voltage detection photocoupler 29 and prevents the relay 25 from turning on if AC current is detected at the communication node due to improper wiring, for example, and voltage including an inverse voltage is detected. Note that operation is the same if the connection between the resistor 28 and the primary side of the inverse-voltage detection photocoupler 29 is reversed.

The arrangement of the child station 3 circuit block is described next. In the child station as in the parent station, a resistor 38 and inverse-voltage detection photocoupler 39 are connected between the communication channel, the device power supply, and the common channel.
The communication channel is connected through the relay 35 to the common channel by way of the constant current circuit 33 and the primary side of the reception photocoupler 36, and is also connected to the common channel through the secondary side of the transmission photocoupler 34 and resistor 331.

To transmit data from the child station 3, current setting of the constant current circuit 223 that can vary the current level in the parent station 2 is set high, and the transmission photocoupler 34 of the child station 3 switches on/off. When the transmission photocoupler 34 is on, the impedance between the signal path and the common channel is determined by resistor 331. The current sent from the parent station 2 thus passes through this resistor 331 and the secondary side of the transmission photocoupler 34 in the child station 3, the voltage at the communication channel node is lower than the voltage of the constant voltage circuit 27 in the parent station 2, and the reception photocoupler 26 goes off. Furthermore, inserting resistor 331 buffers sharp changes in the current level and can reduce high frequency noise on the communication channel.

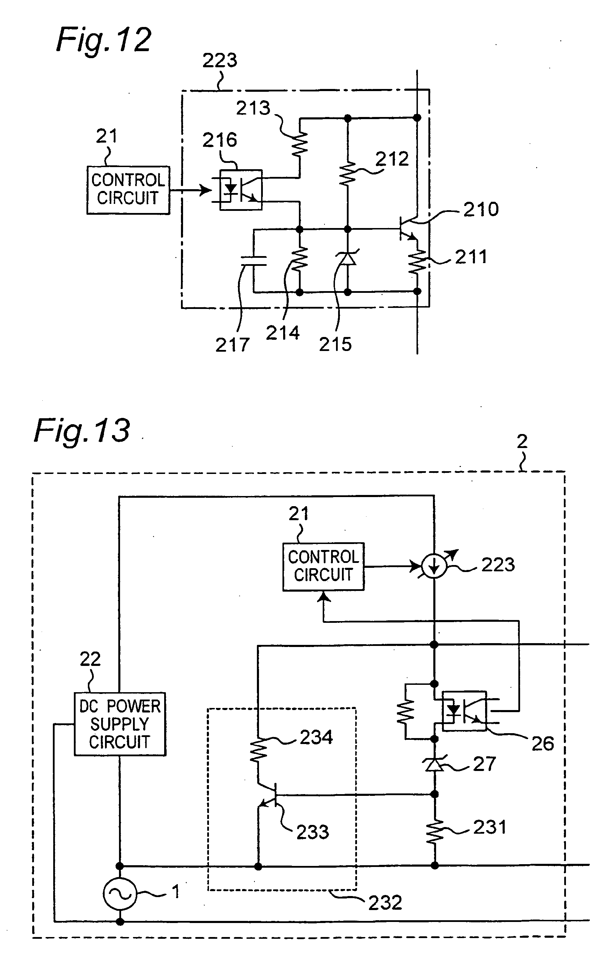

FIG. 12 shows the configuration of the constant current circuit 223 that can vary the current level.
A constant voltage diode 215 is connected to the base of transistor 210, and current detection resistor 211 is connected to the emitter of transistor 210, thus rendering an emitter-follower circuit. The voltage at both ends of the current detection resistor 211 is controlled to substantially equal the voltage from the constant voltage diode 215 minus the voltage between the base and emitter of transistor 210.

If the voltage at both ends of the current detection resistor 211 is constant, the emitter current of the transistor 210 is constant. Furthermore, because the emitter current is substantially equal to the collector current, the current flowing from the collector to the emitter of the transistor 210 is substantially constant.
Resistor 212 operates to pass a weak current to the constant voltage diode 215 to cause a slight voltage drop when photocoupler 216 is off.
There is thus little current flow from the top to the bottom with the circuit shown in FIG. 12.

Turning photocoupler 216 on causes a relatively large current to flow through 213 to the constant voltage diode 215, the constant voltage diode 215 thus causes a specific voltage drop, and the constant current circuit 223 passes the desired current.
A resistor 214 and capacitor 217 are also parallel connected to the constant voltage diode 215.

Resistor 214 is used to rapidly discharge the accumulated charge when the voltage drop of the constant voltage diode 215 that determines the base potential of the transistor 210 is small, and capacitance 217 buffers any sudden change in the base potential of the transistor 210.
Providing this resistor 214 and capacitance 217 enables buffering sudden changes in the base potential while not reducing the speed of the change.
Because the change in the base potential is the change in the current command, the constant current circuit changes the current output quickly but not suddenly.

Because sudden current changes are thus alleviated, the frequency component carried on the communication channel is reduced, and high frequency noise emitted from the communication channel is also reduced.

FIG. 13 shows the arrangement of the bypass control circuit 232. Note that FIG. 13 shows only the related parts of the parent station 2 shown in FIG. 11.
A bypass control circuit 232 comprising resistor 234 and transistor 233 is disposed between the negative side of the DC power supply circuit 22 and the constant current circuit 223 that can vary the current output.
The base of transistor 233 is connected to current detection resistor 231.
When a large current flows to the current detection resistor 231, transistor 233 turns on and the current flowing through the constant voltage diode and the diode of the reception photocoupler 26 flows through resistor 234 to the collector of the transistor 233.

This arrangement prevents the current flowing to the constant voltage diode and the diode of the reception photocoupler 26 from rising above a predetermined level.
This predetermined level is set above the current level required for the reception photocoupler 26 to turn on.

### * Ninth embodiment

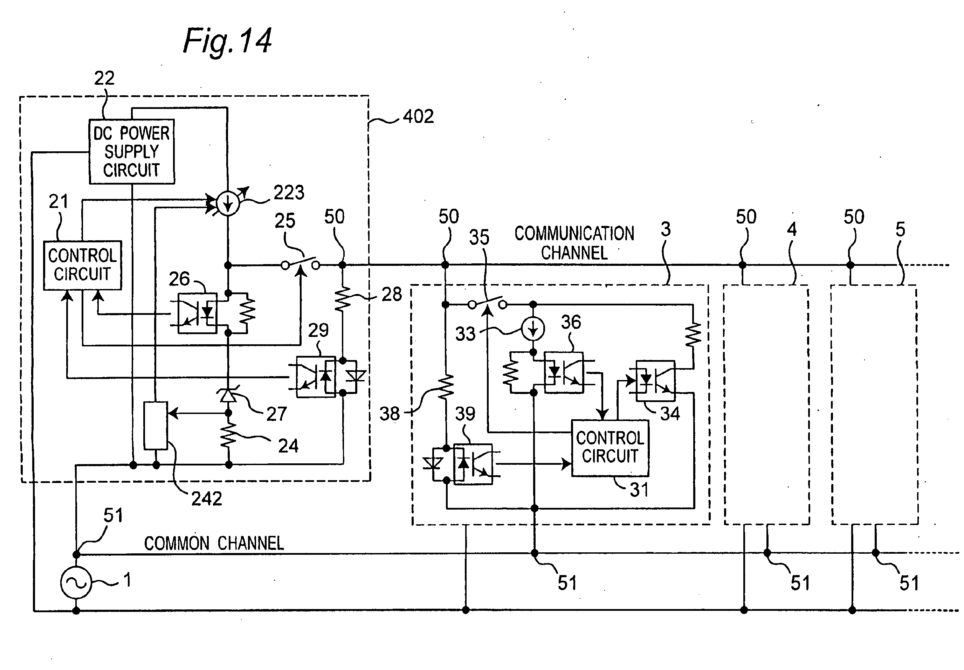

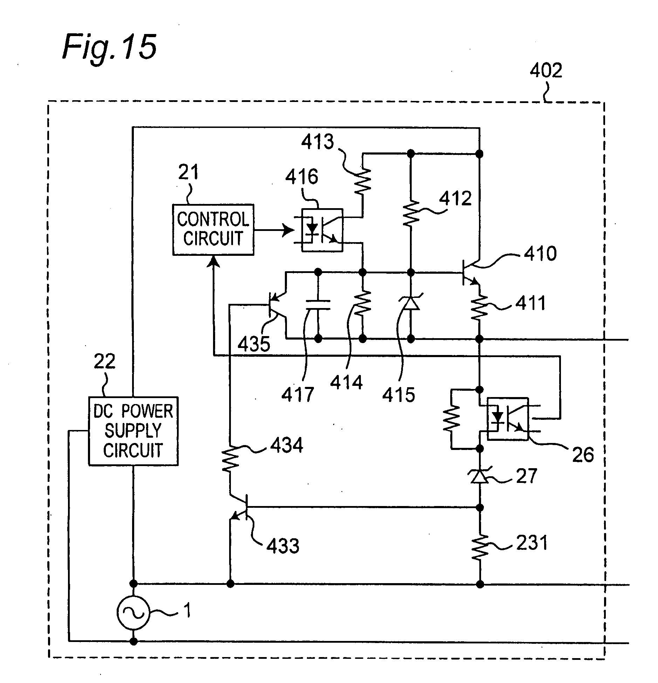

FIG. 14 is a circuit diagram of a ninth embodiment of the invention. In FIG. 15 the arrangement, operation, and effect of the parent station 402 differ from in the eighth embodiment.
The ninth embodiment differs from the eighth embodiment in that a current reduction circuit 242 is provided instead of bypass control circuit 232. Similarly to the eighth embodiment, this current reduction circuit 242 operates to reduce current flow to the constant current circuit 223 that can vary the current output when current flow through the primary side of the reception photocoupler 26 and the constant voltage circuit 27 rises.

The corresponding part of the parent station is shown in FIG. 15. In FIG. 15 transistor 410, rated voltage diode 415, photocoupler 416, and resistors 411, 412, 413, 414 render a constant current circuit that can vary current output in the same way as in the eighth embodiment.

When current flow through the primary side of reception photocoupler 26 and constant voltage circuit 27 is great, the voltage of current detection resistor 231 rises and transistor 433 turns on.
When transistor 433 is on, transistor 435 goes on, the voltage at both ends of rated voltage diode 415 goes to substantially zero, and current flow through the primary side of reception photocoupler 26 and the constant voltage diode 27 drops.
When current flow through the primary side of reception photocoupler 26 and the constant voltage diode 27 drops, the voltage of current detection resistor 231 drops, transistor 433 turns off, transistor 435 also turns off, and current flow through the primary side of reception photocoupler 26 and constant voltage diode 27 rises again. Current flow through the primary side of reception photocoupler 26 and constant voltage diode 27 is thus prevented from rising to a predetermined excessive level.

In addition to preventing current flow through the primary side of reception photocoupler 26 and constant voltage diode 27 from rising to a predetermined excessive level, this embodiment of the invention can automatically set the current flowing from the DC power source to a current level determined according to the number of child stations.

### * Tenth embodiment

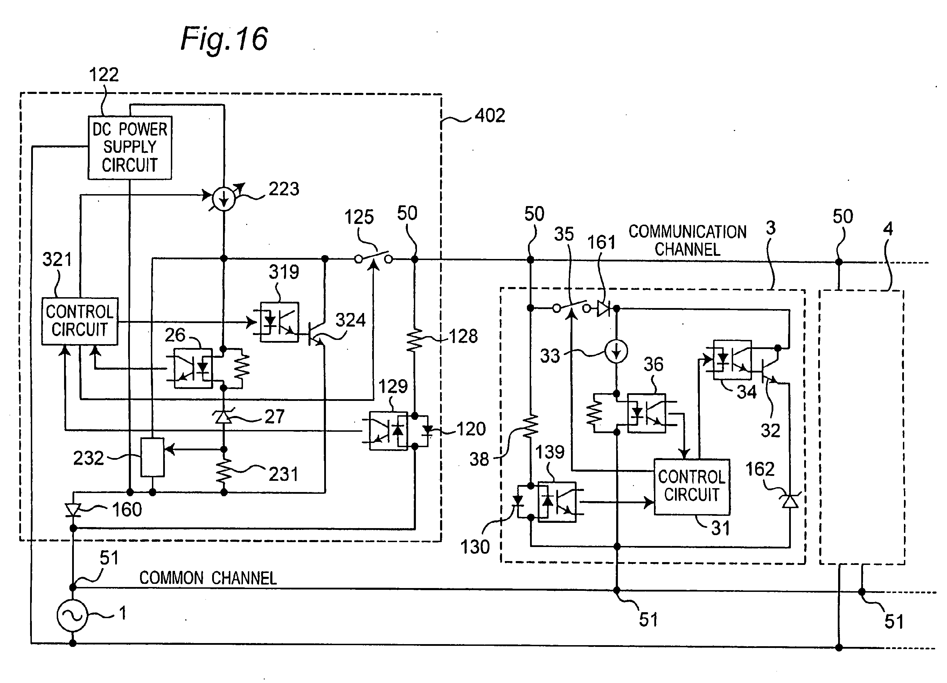

FIG. 16 is a schematic block diagram of a tenth embodiment of the invention that combines the features of the seventh embodiment shown in FIG. 10 and the features of the eighth embodiment shown in FIG. 11. This embodiment additionally disposes a diode 160 between the negative side of the DC power supply circuit 122 and the common channel in the parent station, and in the child station disposes a diode 161 on the input line from the communication channel, and a constant voltage circuit 162 between transistor 32 and the common channel.
The diode 160 added to the parent station and the diode 161 added to the child station prevent an inverse voltage from being applied to the circuit when much external noise is input from the common channel. This prevents the circuit from damage caused by an inverse voltage.

The constant voltage circuit 162 added to the child station prevents excessive voltage from being applied to the constant current circuit 223 of the parent station when the transmission photocoupler 34 of the child station is on, transistor 32 is on, and much external noise is input from the common channel.
Note that if a circuit that is not damaged when an inverse voltage is applied, such as a DC power supply, is used, it is not necessary to connect to the common channel through diode 160.

### [Application in industry]

The present invention can be used in building equipment communication circuits.
Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims.

## Claims

1. A building equipment communication circuit comprising a parent station (2) connected to at least one child station with the communication channel connection unit of each parent station and child station connected to a communication line, and the common channel connection unit of each parent station and child station connected to an AC power source, wherein:
the parent station (2) internally comprises
a DC power supply circuit (22) for converting alternating current to direct current,
a constant current circuit (23), switching device (24; 124), and current detection means (26) connected in series between both output electrodes of the DC power supply circuit,
a parent station relay (25; 125) disposed between the communication channel connection unit and connection node between the switching device and current detection means,
an abnormal voltage detection means (28, 29; 128, 129, 120) disposed between the communication channel connection unit and negative electrode of the DC power supply circuit, and
a control circuit (21; 121) for controlling the switching device and parent station relay based on input signals from the current detection means and abnormal voltage detection means; and
each child station internally comprises
a child station relay (35) connected to one side of the communication channel connection unit,
a child station constant current circuit (33) and child station current detection means (36) disposed in series between the other side of the child station relay and the AC power source,
a child station switching device (34) disposed between the child station relay and the AC power source,
a child station abnormal voltage detection means (38, 39; 138, 139, 130), and
a control circuit (31) for controlling the child station relay and child station switching device based on input signals from the child station current detection means and child station abnormal voltage detection means.

2. The building equipment communication circuit described in claim 1, wherein the parent station control circuit (21) turns the parent station relay (25) on when the voltage between the communication channel connection unit and DC power supply circuit drops below a predetermined level based on output from the parent station abnormal voltage detection means (28, 29), and the child station control circuit (31) turns the child station relay (35) on when the voltage between the communication channel connection unit and DC power supply circuit drops below a predetermined level based on output from the abnormal voltage detection means (38, 39) of the child station.

3. The building equipment communication circuit described in claim 1, further comprising a constant voltage circuit (27) disposed between both output electrodes of the DC power supply circuit (22) of the parent station.

4. The building equipment communication circuit described in claim 1, wherein the abnormal voltage detection means comprises a resistor (28; 38) and a photocoupler (29; 39) having light-emitting diodes polarized in both directions on the primary side.

5. The building equipment communication circuit described in claim 1, wherein the current detection means (26; 36) comprises a photocoupler.

6. The building equipment communication circuit described in claim 5, comprising a resistor (220; 230) parallel connected to the primary side of the photocoupler.

7. The building equipment communication circuit described in claim 3, comprising a resistor parallel connected to the series connection of the parent station current detection means (26) and constant voltage circuit (27).

8. The building equipment communication circuit described in claim 1, wherein the control circuit (21; 31) turns the relay (25; 35) on when a voltage equal to or greater than a predetermined level is not applied between the communication channel and common channel for a predetermined number of times continuously, at least longer than the cycle of the AC power supply.

9. The building equipment communication circuit described in claim 1, wherein the control circuit (21; 31) presents a predetermined display when a high voltage greater than or equal to a predetermined level is detected between the communication channel and the common channel.

10. The building equipment communication circuit described in claim 1, wherein the control circuit (121) turns the parent station relay (125) on when the polarity of the voltage between the communication channel connection unit and DC power supply circuit is not opposite the polarity during communication based on output from the parent station abnormal voltage detection means (128, 129, 120), and the child station control circuit (31) turns the child station relay (35) on when the voltage between the communication channel connection unit and DC power supply circuit is not opposite the polarity during communication based on output from the abnormal voltage detection means (138, 139, 130) of the child station.

11. The building equipment communication circuit described in claim 1, wherein the an abnormal voltage detection means (128, 129, 120) is a circuit comprising a parallel-connected resistor (128), a light-emitting diode that emits when a voltage that is opposite the polarity during communication is applied to the primary side, and a diode (120) of opposite polarity to the light-emitting diode.

12. The building equipment communication circuit described in claim 1, wherein at least one switching device of the parent station and child station comprises a photocoupler and pnp transistor, the emitter of the photocoupler to the phototransistor on the secondary side is connected to the common channel, the collector is connected to the base of the pnp transistor, and the emitter and collector of the pnp transistor constitute a switching circuit.

13. The building equipment communication circuit described in claim 1, wherein at the switching device of the child station comprises a photocoupler and transistor, the emitter of the photocoupler to the phototransistor on the secondary side is connected to the base of the transistor, the collector is connected to the collector of the transistor, the emitter of the transistor is connected to the common channel, and the emitter and collector of the transistor constitute a switching circuit.

## Patentansprüche

1. Haustechnik-Kommunikationsschaltung, die eine Mutterstation (2) enthält, die mit wenigstens einer Tochterstation verbunden ist, wobei die Kommunikationskanalverbindungseinheit jeder Mutterstation und Tochterstation mit einer Kommunikationsleitung verbunden ist, und wobei die Gemeinschaftskanalverbindungseinheit jeder Mutterstation und Tochterstation mit einer Wechselstromquelle verbunden ist, wobei:
die Mutterstation (2) intern enthält:
eine Gleichstromversorgungsschaltung (22) zum Wandeln von Wechselstrom in Gleichstrom,
eine Konstantstromschaltung (23), eine Schaltvorrichtung (24; 124) und Stromerfassungsmittel (26), die in Reihe zwischen den beiden Ausgangselektroden der Gleichstromversorgungsschaltung angeschlossen sind,
ein Mutterstation-Relais (25; 125), das zwischen der Kommunikationskanalverbindungseinheit und dem Verbindungsknoten zwischen der Schaltvorrichtung und den Stromerfassungsmitteln angeordnet ist,
ein Fehlspannungserfassungsmittel (28, 29; 128, 129, 120), das zwischen der Kommunikationskanalverbindungseinheit und einer negativen Elektrode der Gleichstromversorgungseinheit angeordnet ist, und
eine Steuerschaltung (21; 121) zum Steuern der Schaltvorrichtung und des Mutterstations-Relais auf der Grundlage von Eingangssignalen von den Stromerfassungsmitteln und dem Fehlspannungserfassungsmittel; und
wobei jede Tochterstation intern enthält:
ein Tochterstation-Relais (35), das mit einer Seite der Kommunikationskanalverbindungseinheit verbunden ist,
eine Tochterstation-Konstantstromschaltung (33) und ein Tochterstation-Stromerfassungsmittel (36), die in Reihe zwischen der anderen Seite des Tochterstation-Relais und der Wechselstromquelle angeordnet sind,
eine Tochterstation-Schaltvorrichtung (34), die zwischen dem Tochterstation-Relais und der Wechselstromquelle angeordnet ist,
ein Tochterstation-Fehlspannungserfassungsmittel (38, 39; 138, 139, 130), und
eine Steuerschaltung (31) zum Steuern des Tochterstation-Relais und der Tochterstation-Umschaltvorrichtung auf der Grundlage von Eingangssignalen von dem Tochterstation-Stromerfassungsmittel und dem Tochterstation-Fehlspannungserfassungsmittel.

2. Haustechnik-Kommunikationsschaltung nach Anspruch 1, wobei die Mutterstation-Steuerschaltung (21) auf der Grundlage der Ausgabe vom Mutterstation-Fehlspannungserfassungsmittel (28, 29) das Mutterstation-Relais (25) einschaltet, wenn die Spannung zwischen der Kommunikationskanalverbindungseinheit und der Gleichstromversorgungsschaltung unter einen vorgegebenen Pegel fällt, und die Tochterstation-Steuerschaltung (31) auf der Grundlage einer Ausgabe vom Fehlspannungserfassungsmittel (38, 39) der Tochterstation das Tochterstation-Relais (35) einschaltet, wenn die Spannung zwischen der Kommunikationskanalverbindungseinheit und der Gleichstromversorgungsschaltung unter einen vorgegebenen Pegel fällt.

3. Haustechnik-Kommunikationsschaltung nach Anspruch 1, ferner eine Konstantspannungsschaltung (27) enthaltend, die zwischen beiden Ausgangselektroden der Gleichstromversorgungsschaltung (22) der Mutterstation angeordnet ist.

4. Haustechnik-Kommunikationsschaltung nach Anspruch 1, wobei das Fehlspannungserfassungsmittel einen Widerstand (28; 38) und einen Optokoppler (29; 39) mit lichtemittierenden Dioden, die in beiden Richtungen polarisiert sind, auf der Primärseite enthält.

5. Haustechnik-Kommunikationsschaltung nach Anspruch 1, wobei das Stromerfassungsmittel (26; 36) einen Optokoppler umfasst.

6. Haustechnik-Kommunikationsschaltung nach Anspruch 5, einen Widerstand (220; 230) enthaltend, der parallel mit der Primärseite des Optokopplers verbunden ist.

7. Haustechnik-Kommunikationsschaltung nach Anspruch 3, einen Widerstand enthaltend, der parallel mit der Reihenschaltung der Mutterstation-Stromerfassungseinrichtung (26) und der Konstantspannungsschaltung (27) verbunden ist.

8. Haustechnik-Kommunikationsschaltung nach Anspruch 1, wobei die Steuerschaltung (21; 31) das Relais (25; 35) einschaltet, wenn eine Spannung gleich oder größer als ein vorgegebener Pegel zwischen dem Kommunikationskanal und dem Gemeinschaftskanal für eine vorgegebene Anzahl von Zeitpunkten, wenigstens länger als der Zyklus der Wechselstromversorgung, kontinuierlich nicht anliegt.

9. Haustechnik-Kommunikationsschaltung nach Anspruch 1, wobei die Steuerschaltung (21; 31) eine vorgegebene Anzeige bereitstellt, wenn eine hohe Spannung größer oder gleich einem vorgegebenen Pegel zwischen dem Kommunikationskanal und dem Gemeinschaftskanal erfasst wird.

10. Haustechnik-Kommunikationsschaltung nach Anspruch 1, wobei die Steuerschaltung (21) auf der Grundlage einer Ausgabe vom Mutterstation-Fehlspannungserfassungsmittel (128, 129, 120) das Mutterstation-Relais (125) einschaltet, wenn die Polarität der Spannung zwischen der Kommunikationskanalverbindungseinheit und der Gleichstromversorgungsschaltung nicht entgegengesetzt zu der Polarität während der Kommunikation ist, und wobei die Tochterstation-Steuerschaltung (31) auf der Grundlage einer Ausgabe von dem Fehlspannungserfassungsmittel (138, 139, 130) der Tochterstation das Tochterstation-Relais (35) einschaltet, wenn die Spannung zwischen der Kommunikationskanalverbindungseinheit und der Gleichstromversorgungsschaltung nicht entgegengesetzt zu der Polarität während der Kommunikation ist.

11. Haustechnik-Kommunikationsschaltung nach Anspruch 1, wobei das Fehlspannungserfassungsmittel (128, 129, 120) eine Schaltung ist, die einen parallel angeschlossenen Widerstand (128), eine lichtimitierende Diode, die emittiert, wenn an der Primärseite eine Spannung entgegengesetzt zu der Polarität während der Kommunikation anliegt, und eine Diode (120) mit zu der lichtimitierenden Diode entgegengesetzter Polarität enthält.

12. Haustechnik-Kommunikationsschaltung nach Anspruch 1, wobei wenigstens eine Schaltvorrichtung der Mutterstation und der Tochterstation einen Optokoppler und PNP-Transistor enthält, wobei der Emitter des Optokopplers zu dem Phototransistor auf der Sekundärseite mit dem Gemeinschaftskanal verbunden ist, wobei der Kollektor mit der Basis des PNP-Transistors verbunden ist, und wobei der Emitter und der Kollektor des PNP-Transistors eine Schalt-Schaltung bilden.

13. Haustechnik-Kommunikationsschaltung nach Anspruch 1, wobei die Schaltvorrichtung der Tochterstation einen Optokoppler und Transistor umfasst, wobei der Emitter des Optokopplers zu dem Phototransistor auf der Sekundärseite mit der Basis des Transistors verbunden ist, wobei der Kollektor mit dem Kollektor des Transistors verbunden ist, wobei der Emitter des Transistors mit dem Gemeinschaftskanal verbunden ist, und wobei der Emitter und der Kollektor des Transistors eine Schalt-Schaltung bilden.

## Revendications

1. Circuit de communication d'équipement de construction comprenant une station patent (2) connectée à au moins une station enfant avec l'unité de connexion de canaux de communication de chaque station parent et station enfant connectée à une ligne de communication, et l'unité de connexion de canaux communs de chaque station parent et station enfant connectée à une source d'alimentation CA, où :
la station parent (2) comprend intérieurement
un circuit (22) d'alimentation CC pour convertir du courant alternatif en courant continu,
un circuit (23) de courant constant, un dispositif de commutation (24 ; 124), et un moyen (26) de détection de courant connectés en série entre les deux électrodes de sortie du circuit d'alimentation CC,
un relais (25 ; 125) de station parent disposé entre l'unité de connexion de canaux de communication et le noeud de connexion entre le dispositif de commutation et le moyen de détection de courant,
un moyen (28, 29 ; 128, 129, 120) de détection de tension anormale disposé entre l'unité de connexion de canaux de communication et l'électrode négative du circuit d'alimentation CC, et
un circuit de commande (21 ; 121) pour commander le dispositif de commutation et le relais de station parent sur la base de signaux d'entrée à partir du moyen de détection de courant et du moyen de détection de tension anormale ; et
chaque station enfant comprend intérieurement
un relais (35) de station enfant connecté à un côté de l'unité de connexion de canaux de communication,
un circuit (33) de courant constant de station enfant et un moyen (36) de détection de courant de station enfant disposés en série entre l'autre côté du relais de station enfant et la source d'alimentation CA,
un dispositif (34) de commutation de station enfant disposé entre le relais de station enfant et la source d'alimentation CA,
un moyen (38, 39 ; 138, 139, 130) de détection de tension anormale de station enfant, et
un circuit de commande (31) pour commander le relais de station enfant et le dispositif de commutation de station enfant sur la base de signaux d'entrée à partir du moyen de détection de courant de station enfant et du moyen de détection de tension anormale de station enfant.

2. Circuit de communication d'équipement de construction décrit dans la revendication 1, dans lequel le circuit (21) de commande de station parent active le relais (25) de station parent lorsque la tension entre l'unité de connexion de canaux de communication et le circuit d'alimentation CC chute en-dessous d'un niveau prédéterminé sur la base de la sortie à partir du moyen (28, 29) de détection de tension anormale de station parent, et le circuit (31) de commande de station enfant active le relais (35) de station enfant lorsque la tension entre l'unité de connexion de canaux de communication et le circuit d'alimentation CC chute en-dessous d'un niveau prédéterminé sur la base de la sortie à partir du moyen (38, 39) de détection de tension anormale de station enfant.

3. Circuit de communication d'équipement de construction décrit dans la revendication 1, comprenant en outre un circuit (27) de tension constante disposé entre les deux électrodes de sortie du circuit (22) d'alimentation CC de la station parent.

4. Circuit de communication d'équipement de construction décrit dans la revendication 1, dans lequel le moyen de détection de tension anormale comprend un résistor (28 ; 38) et un photo-coupleur (29 ; 39) ayant des diodes électroluminescentes polarisées dans les deux directions sur le côté primaire.

5. Circuit de communication d'équipement de construction décrit dans la revendication 1, dans lequel le moyen (26 ; 36) de détection de courant comprend un photo-coupleur.

6. circuit de communication d'équipement de construction décrit dans la revendication 5, comprenant un résistor (220 ; 230) connecté en parallèle au côté primaire du photo-coupleur.

7. circuit de communication d'équipement de construction décrit dans la revendication 3, comprenant un résistor connecté en parallèle à la connexion en série du moyen (26) de détection de courant de station parent et le circuit (27) de tension constante.

8. circuit de communication d'équipement de construction décrit dans la revendication 1, dans lequel le circuit de commande (21 ; 31) active le relais (25 ; 35) lorsqu'une tension supérieure ou égale à un niveau prédéterminé n'est pas appliquée entre le canal de communication et le canal commun pour un nombre de périodes prédéterminé de manière continue, au moins plus longues que le cycle d'alimentation CA.

9. circuit de communication d'équipement de construction décrit dans la revendication 1, dans lequel le circuit de commande (21 ; 31) présente un affichage prédéterminé lorsqu'une tension élevée supérieure ou égale à un niveau prédéterminé est détectée entre le canal de communication et le canal commun.

10. circuit de communication d'équipement de construction décrit dans la revendication 1, dans lequel le circuit de commande (121) active le relais (125) de station parent lorsque la polarité de la tension entre l'unité de connexion de canaux de communication et le circuit d'alimentation CC n'est pas opposée à la polarité durant la communication sur la base de la sortie à partir du moyen (128, 129, 120) de détection de tension anormale de station parent, et le circuit (31) de commande de station enfant active le relais (35) de station enfant lorsque la tension entre l'unité de connexion de canaux de communication et le circuit d'alimentation CC n'est pas opposée à la polarité durant la communication sur la base de la sortie à partir du moyen (138, 139, 130) de détection de tension anormale de la station enfant.

11. Circuit de communication d'équipement de construction décrit dans la revendication 1, dans lequel le moyen (128, 129, 120) de détection de tension anomale est un circuit comprenant un résistor connecté en parallèle (128), une diode électroluminescente qui effectue des émissions lorsqu'une tension qui est opposée à la polarité durant la communication est appliquée au côté primaire, et une diode (120) de polarité opposée à la diode électroluminescente.

12. Circuit de communication d'équipement de construction décrit dans la revendication 1, dans lequel au moins un dispositif de commutation de la station parent et station enfant comprend un photo-coupleur et un transistor pnp, l'émetteur du photo-coupleur au phototransistor sur le côté secondaire est connecté au canal commun, le collecteur est connecté à la base du transistor pnp, et l'émetteur et le collecteur du transistor pnp constituent un circuit de commutation.

13. Circuit de communication d'équipement de construction décrit dans la revendication 1, dans lequel au niveau du dispositif de commutation de la station enfant comprend un photo-coupleur et un transistor, l'émetteur du photo-coupleur au phototransistor sur le côté secondaire est connecté à la base du transistor, le collecteur est connecté au collecteur du transistor, l'émetteur du transistor est connecté au canal commun, et l'émetteur et le collecteur du transistor constituent un circuit de commutation.
